# EUROPEAN PATENT APPLICATION

(11) **EP 2 804 073 A1**
(43) Date of publication of application: **19.11.2014**
(21) Application number: 13167813.8
(22) Date of filing: 15.05.2013
(51) Int. Cl.: G06F 1/32

(54) **All-in-one computer and power management method thereof**

(71) Applicant: Giga-Byte Technology Co., Ltd., New Taipei City 231 (TW)
(72) Inventor: Tung, Lin Tsai, 231 New Taipei City (TW)
(74) Representative: Schwerbrock, Florian

(57) **Abstract**

An all-in-one computer includes a display module and a host provided in a housing of the display module. The host includes a power module, a cell module and a circuit board electrically connected with the power module, the cell module and a panel of the display module respectively. A processing unit and a control unit are provided on the circuit board. The processing unit is configured to optionally receive the power from the power module and operating at a first frequency or receive the power from the cell module and operate at a second frequency lower than the first frequency. The control unit is configured to disable the power module and enable the cell module according to a voltage level of the power module and cause the processing unit to operate at a reduced frequency for decreasing power consumption thereof are provided.

## Description

### CROSS-REFERENCE TO RELATED APPLICATIONS

This application claims the benefit of the filing date of US Provisional Patent Application No. 61/585,240, filed on 2012/01/11, with the United States Patent and Trademark Office, the disclosure of which is incorporated herein in its entirety by reference.

### Field of the Invention

The invention relates to a computer; more particularly, to an all-in-one computer.

### Description of the Prior Art

A computer has become indispensible in modem society. Due to remarkable advances in the technology and needs for various applications, the computer has made great progress in not only the performance but hardware architecture. It is well-known that the computer can be mainly grouped into two types - a desktop computer intended for regular use at a single location and a laptop computer intended for mobile use. For example, "netbook" is a smaller, lighter, more portable laptop, and tablet is also developed from the laptop and featured by touching a touch panel instead of using a physical keyboard as an input means; on the other hand, an all-in-one computer is developed from the desktop by combining the computer's internal components into the same housing as the monitor.

All-in-one computers are typically more portable than other desktop computers and many have been built with carrying handles integrated into the housing. They can simply be unplugged and transported to a new location, bringing about great expediencies for the users.

Unlike the laptop computer, the conventional all-in-one computer is powered by an external power supply, which is also the case of the desktop computer. However, since shortage or instability of the external power supply may occur any time, the conventional all-in-one computer is externally connected with an uninterrupted power supply (UPS) in order to provide near-instantaneous protection from an unexpected power disruption which often causes serious data loss or hardware injuries. Thus, the user is allowed to start a standby power source or properly shut down the protected equipment in timely response thereto.

Nevertheless, it is not suitable to place the UPS on a common working table such as a computer desk due to larger size and heavier weight thereof. Besides, a relevant wiring process is required when connecting the UPS to the computer. Hence, the all-in-one computer that is connected with the UPS for preventing a fail in the input power source accompanies the problems of reduced space, more complicated wirings, and inconvenient change of location. This is to a certain extent opposed to our expectations to the all-in-one computer integrating the host with the display.

Accordingly, there is a need to develop an all-in-one computer that can eliminate the above drawbacks as far as possible without sacrificing the performance and effect thereof.

### SUMMARY OF THE INVENTION

In view of this, the invention discloses an all-in-one computer and a method of managing power of the same for solving the problems of an unstable operation resulting from a sudden breakoff in the external power supply and reduced space, more complicated wirings, and inconvenient change of location when connected to a UPS.

An all-in-one computer is disclosed having a display module and a host. The display module includes a housing and a panel exposed from a side of the housing. The host which is located in the housing includes a power module electrically connected with the panel and an external power supply outside of the housing; a cell module electrically connected with the power module and the panel and having an internal power supply; and a circuit board electrically connected with the power module, the cell module and the panel. Besides, the circuit board is provided with a processing unit and a control unit. The processing unit optionally receives power from the external power supply via the power module and operates at a first frequency normally or receives power from the internal power supply via the cell module and operates at a second frequency. The control unit dynamically detects a voltage level of the power module, disables the power module or enables the cell module according to the voltage level, and causes the processing unit to operate at the second frequency lower than the first frequency from the first frequency.

In one preferred embodiment, the processing unit further receives the internal power supply and operates at the first frequency for a predetermined time period and operates at the second frequency for a buffer time period which is greater than the predetermined time period.

In another preferred embodiment, the host further includes a charging circuit electrically connected with the power module and the cell module and transmitting the external power supply received via the power module to the cell module. The cell module receives the external power supply and stores it as the internal power supply.

The present invention also discloses a method for managing power of an all-in-one computer, comprising: transmitting an external power supply to a processing unit normally operating at a first frequency using a power module; dynamically detecting a voltage level of the power module using a control unit and enabling a cell module while disabling the power module according to the voltage level; transmitting an internal power supply to the processing unit using the cell module; and causing the processing unit to operate at a second frequency lower than the first frequency from the first frequency using the control unit.

In still another preferred embodiment, the method further includes receiving the internal power supply from the cell module and operating at the first frequency for a predetermined time period while operating at the second frequency for a buffer time period greater than the predetermined time period using the processing unit.

In yet another preferred embodiment, the method further includes transmitting the external power supply to the cell module using the power module; and receiving and storing the external power supply as the internal power supply using the cell module.

The present invention is advantageous in that the power module and the cell module are both provided, such that the all-in-one computer is powered by the external power supply connected with the power module in a normal condition and switched to the internal power supply connected with the cell module with the power module disabled using the control unit in an unstable condition of the external power supply. The control unit is also responsible for the frequency down-conversion of the processing unit, thereby decreasing the energy consumption rate and increasing the power efficiency of the cell module. In this way, a sufficient time can be afforded for data backup and a proper shutdown of the computer in case the external power supply fails.

The characteristics, realization and functions of the invention are disclosed in the following description with reference to the preferred exemplified embodiments and the accompanying drawings.

### BRIEF DESCRIPTION OF THE DRAWINGS

These and other features and advantages of the various embodiments disclosed herein will be better understood with respect to the following description and drawings, in which like numbers refer to like parts throughout, and in which:
FIG. 1 is an exploded view of an all-in-one computer according to a first embodiment of the present invention;
FIG. 2 is a flow chart of a first method for managing power of the all-in-one computer of FIG. 1;
FIG. 3 is a flow chart of a second method for managing power of the all-in-one computer of FIG. 1;
FIG. 4 is a flow chart of a third method for managing power of the all-in-one computer of FIG. 1;
FIG. 5 is an exploded view of an all-in-one computer according to a second embodiment of the present invention; and
FIG. 6 is a flow chart of a method for managing power of the all-in-one computer of FIG. 5.

### DETAILED DESCRIPTION OF THE INVENTION

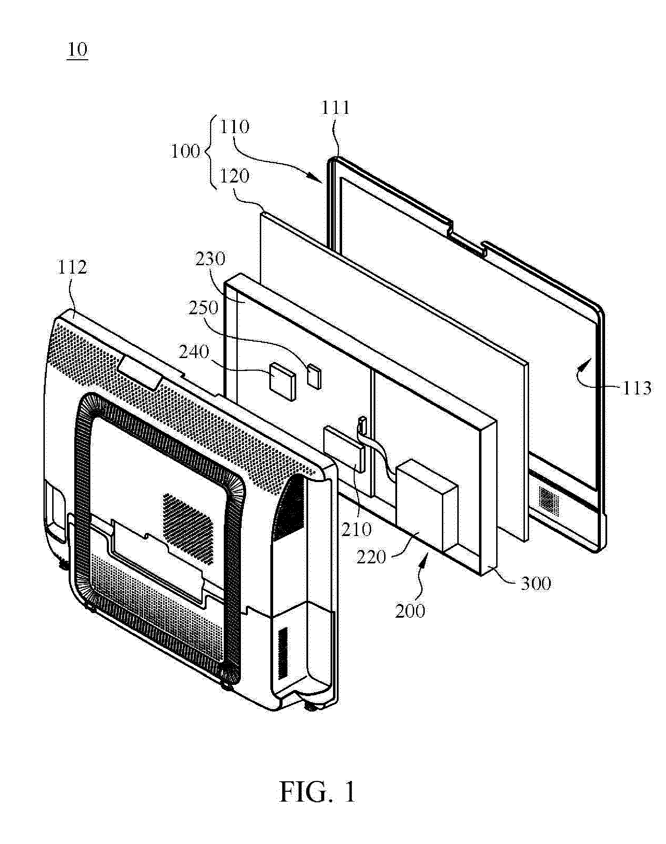

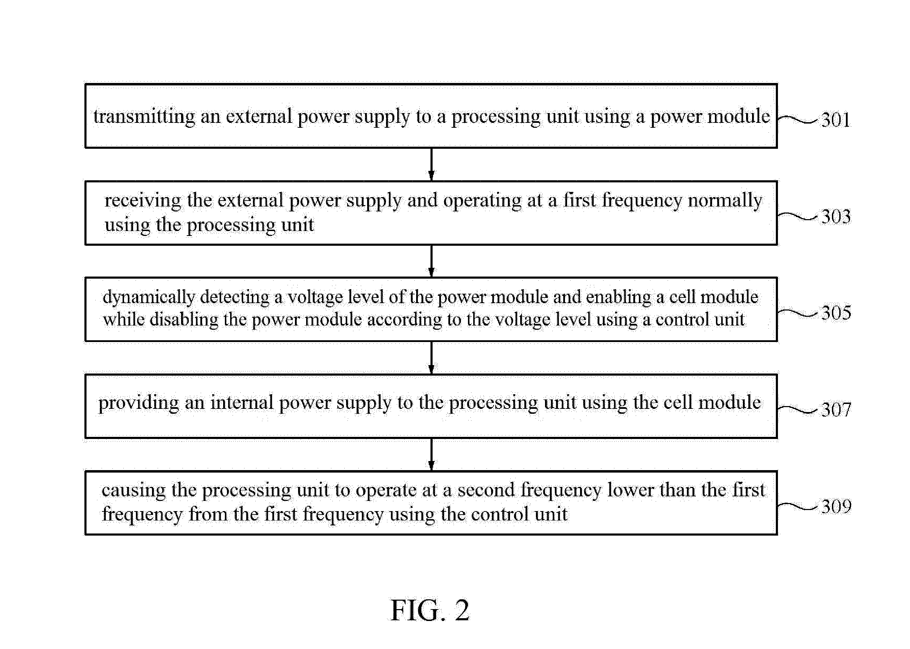

FIGs. 1 and 2 are respectively an exploded view of an all-in-one computer 10 according to a first embodiment of the present invention and a flow chart of a first method for managing power thereof.

In the first embodiment, the all-in-one computer 10 includes a display module 100 and a host 200. The display module 100 includes a housing 110 having a first casing 111 and a second casing 112 and a panel 120. An accommodating space is formed between the first and the second casings 111 and 112, and an opening 113 is formed on a side of the first casing 111. The panel 120 is located within the accommodating space to cover and be partly exposed from the opening 113. A power module 210, a cell module 220, and a circuit board 210 are provided to the host 200 which is disposed on a frame 300 in the housing 110. The power module 210 is electrically connected with the panel 120 and an external power supply (not shown) outside the housing 110. The cell module 220 which is to be electrically connected with the power module 210 and the panel 120 stores an internal electricity and equipped with a high C-rate (battery's capacity measured in Amp-hours) cell core. The circuit board 230 is electrically connected to the power module 210, the cell module 220, and the panel 120 and a processing unit 240 and a control unit 250 are provided thereon.

Among others, the processing unit 240 may receive the external power supply from the power module 210 and operate at a first frequency under a normal condition. Alternatively, the processing unit 240 may receive an internal power supply from the cell module 220 and operate temporarily at a second frequency that is lower than the first frequency. The control unit 250 serves to dynamically detect a voltage level of the power module 210, disable the power module 210 while enable the cell module 220. In this way, the power supply for the processing unit 240 may be switched to the cell module 220 from the power module 210. Also, for decreasing the energy consumption of the processing unit 240, the control unit 250 controls change of the frequency at which the processing unit 240 operates from the first to the second frequency both ranging from 800 MHz to 3600 MHz, thereby diminishing the core power thereof from about 24.99 W to about 11.37 W for example.

Besides, regarding the power management of the all-in-one computer 10 of the first embodiment, as the initial step, the external power supply is transmitted from the power module 210 to the processing unit 240 (step 301), as shown in FIG. 2. Next, the processing unit 240 receives the external power supply and operates at a first frequency normally (step 303) for enabling executions of some application programs like document management software or game software with the help of the windows interface displayed on the panel 120. However, during the process of step 303, the control unit 250 detects and adjusts the voltage level of the power module 210 in a dynamic way. When breakoff of the external power supply or a sharp voltage drop (10% or 15% voltage drop for example) occurs, the control unit 250 curtails the voltage level of the power module 210 first in response, then disables the power module 210 and enables the cell module 220 (step 305). After that, the internal power supply is provided to the processing unit 240 from the cell module 220 (step 307).

Also, the control unit 250 manipulates the frequency at which the processing unit 240 operates to decrease from the first to the second frequency for a reduced power consumption (step 309).

The control unit 250 of this embodiment may be, for example, a micro control unit (MCU), a firmware on the circuit board 230 or a basic input/output system (BIOS). The MCU is exemplified for illustration in the embodiments of the present invention; however, it is to be noted that other types of the control unit 250 suitable for practical applications may be selected and the present invention is not limited thereto.

In particular, in step 309, decreasing the frequency at which the processing unit 240 operates from the first to the second frequency may be performed by executing a system management interrupt (SMI) in ACPI (Advanced Configuration and Power Interface) or non-ACPI mode. After the SMI is triggered, the processing unit 240 executes program codes in the control unit 250 and manipulates a certain register thereon like model-specific register or RATIO/clock register or programming clock generator. Thus, the frequency at which the processing unit 240 operates is decreased successfully.

Alternatively, in step 309, decreasing the frequency at which the processing unit 240 operates from the first to the second frequency may be performed by executing a system control interrupt (SCI) in ACPI mode. After the SCI is triggered, the ACPI driver will notify relevant drivers such as an EC (embedded controller) driver and invoke ACPI source language code (ASL code) stored in the BIOS for changing the frequency at which the processing unit 240 operates. Or alternatively, in step 309, decreasing the frequency at which the processing unit 240 operates from the first to the second frequency may be embodied by way of a processor of a hardware or signals from a clock generator. However, it will be appreciated that one of ordinary skill in the art may use other ways to lower the frequency at which the processing unit works as required.

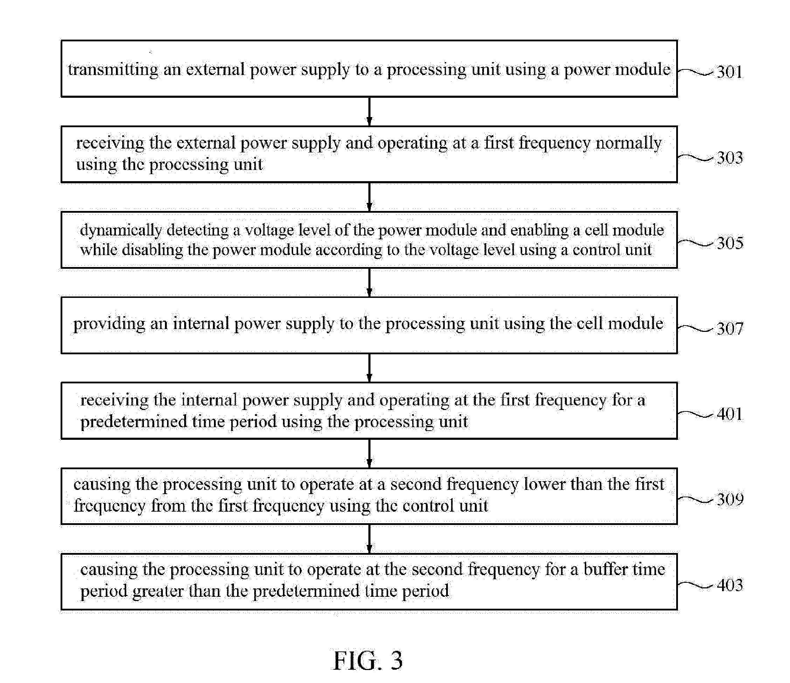

FIG. 3 is flow chart of a second method for managing power of the all-in-one computer 10 of the first embodiment. Compared with the first method of FIG. 2, the second method of FIG. 3 further includes causing the processing unit 240 to operate at the first frequency for a predetermined time period (step 401) and operate at the second frequency for a buffer time period greater than the predetermined time period (step 403) after receiving the internal power supply from the cell module. For example, when the all-in-one computer 10 loses its connection of the external power supply, the control unit 250 detects the change of the voltage level and shuts down the power module 210 while enables the cell module 220, thereby changing the power source to the processing unit 240 from the power module 210 to the cell module 220.

The processing unit 240 will operate at the first frequency for a period of time, then the control unit 250 causes the processing unit 240 to drop the operating frequency from the first frequency to the second frequency during a predetermined time period. The predetermined time period may be the response time the control unit 250 takes to react to the change of the voltage level and to realize the frequency drop of the processing unit 240, for example, 2-3 seconds or 1 minute. Besides, during the above frequency drop process, the battery's capacity output from the cell module 220 to the processing unit 240 is reduced for example from 5C to 3C, so that the internal power supply stored in the cell module 220 is competent for the processing unit 240 to work normally within a buffer time period of 10-30 minutes for example. Therefore, a sufficient time can be afforded for data backup and a proper shutdown of the computer or recovery of the external power supply.

In the present invention, it is noted that once the external power supply is recovered, the control unit 250 disables the cell module 220 and enables the power module 210 as per the detection of the recovery of the voltage level. In the meanwhile, when the external power supply is served to the processing unit 240 again, on one hand, the control unit 250 causes the processing unit 240 to return to operate at the first frequency which leads to a more effective performance; on the other hand, the cell module 220 may be charged by the power module 210 at one time.

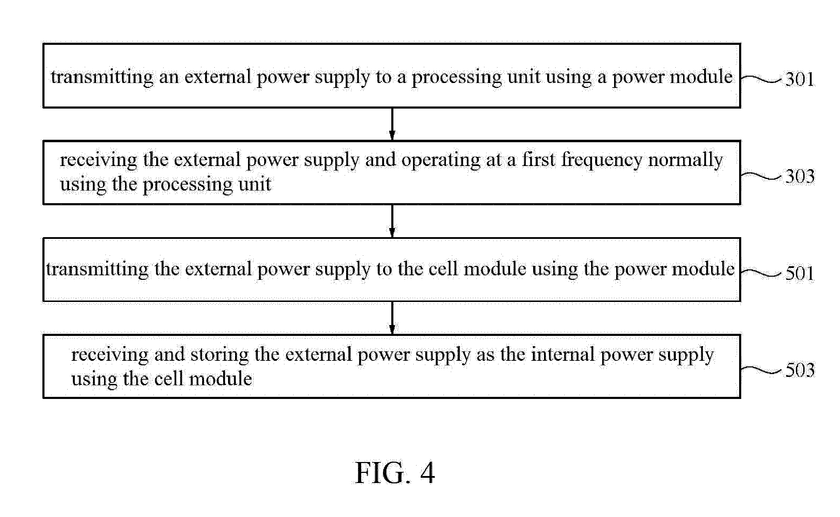

FIG. 4 is a third method for managing power of the all-in-one computer 10 of the first embodiment of the present invention. In the third method, the external power supply is transmitted from the power module 210 to the cell module 220 (step 501) and stored therein as an internal power supply (step 503).

When the external power supply is furnished steadily to the all-in-one computer 10, the cell module 220 is charged by the power module 210. In other words, the power module 210 transmits the external power supply to the cell module 220, while the cell module 220 stores the received external power supply as its internal power supply. Accordingly, the cell module 220 of the all-in-one computer 10 eliminates the need of an additional charger, thereby simplifying the circuit design and improving the convenience for its use.

In the present invention, the cell module configured for switching the power supply and the control unit like firmware or BIOS configured for manipulating the operating frequency of the processing unit are effective in keeping the operation of the all-in-one computer stable in spite of an unstable power supply. Desirably, once the external power supply fails, breaks down or becomes unstable, the control unit causes the processing unit to decrease the operating frequency, thus minimizing the energy consumption of the computer and prolonging the service time of the cell module. It is easy enough for the user to backup data and properly shut down the computer in response to the unexpected situation or the like.

Further, when the external power supply recovers its connection with the computer, the voltage level of the power module changes as a signal of returning to the normal operating frequency of the processing unit. On receipt of the return signal, the control unit causes the processing unit to work at the higher frequency.

As a preferred embodiment, in the present invention, the processing unit receives the internal power supply from the cell module and keeps operating at the normal frequency for a certain time period before switching to the lower second frequency. This not only reduces energy costs but also eliminates the demand of an additional UPS. Besides, since the processing unit operates at the second frequency for a buffer time, data backup and proper shutdown of the computer can be completed smoothly.

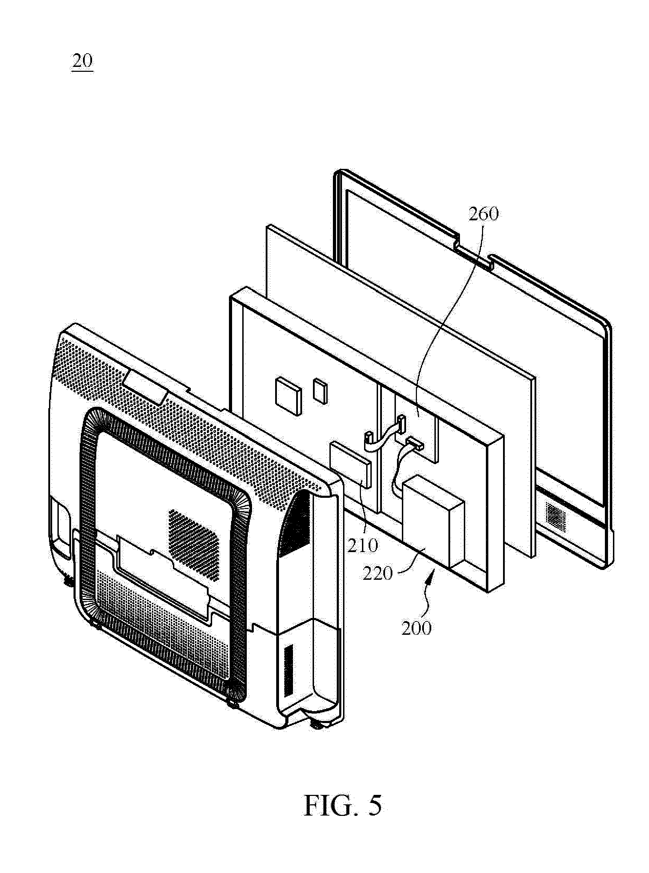

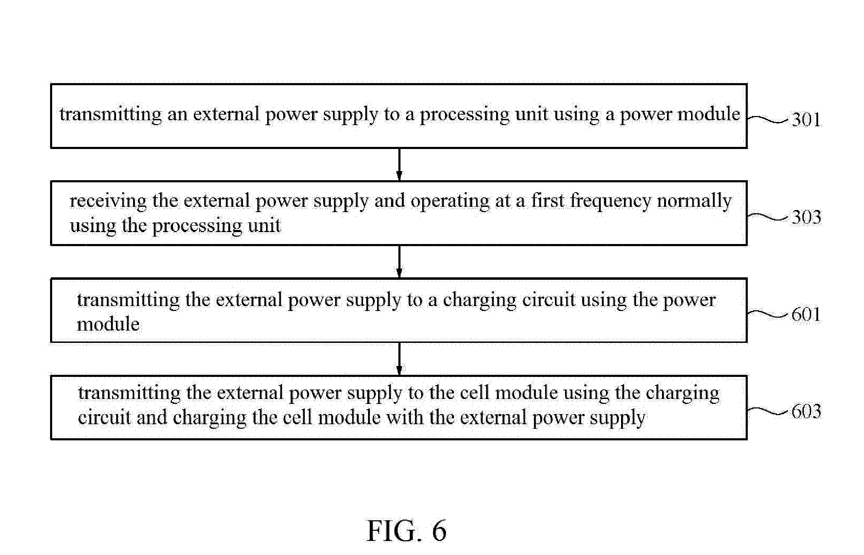

FIGs. 5 and 6 are respectively an exploded view of an all-in-one computer 20 according to a second embodiment and a flow chart of a method for managing power thereof.

The all-in-one computer 20 of the second embodiment is structurally the same as the all-in-one computer 10 of the first embodiment with a difference of a charging circuit 260 as a part of the host 200 of the all-in-one computer 20. The charging circuit 260 is electrically connected with the power module 210 and the cell module 220 and receives the external power supply from the power module 210. The external power supply is then transmitted to the cell module 220 and becomes the internal power supply of the cell module 220 via the charging circuit 260.

In light of the above, the method for managing power of the all-in-one computer 20 of FIG. 5 further includes, as shown in FIG. 6, steps of transmitting the external power supply to the charging circuit 260 by the power module 210 (step 601), transmitting the external power supply to the cell module 220 by the charging circuit 260 and charging the cell module 220 with the external power supply (step 603).

To sum up, the present invention achieves the goal of smooth and steady operation of the computer in spite of an unstable power supply by the arrangement of the power module and the cell module together with the control unit. The control unit can manipulate the operating frequency of the processing unit by switching between the external and internal power supplies as per the voltage level of the power module. As a result, the user has sufficient time to backup data and properly shut down the computer, so data loss and breakdown of the computer can be prevented in a more practical and economic way. Moreover, since a UPS is not required additionally, the all-in-one computer of the present invention is quite favorable with the merits of compact size, less complicated wirings, and convenient change of location.

From the above description of the invention, it is manifest that various techniques can be used for implementing the concepts of the invention without departing from the scope thereof. Moreover, while the invention has been described with specific reference to certain embodiments, a person of ordinary skills in the art would recognize that changes can be made in form and detail without departing from the spirit and the scope of the invention. The described embodiments are to be considered in all respects as illustrative and not restrictive. It is intended that the scope of the invention is defined by the appended claims.

## Claims

1. An all-in-one computer (10, 20), **characterized by** comprising:
a display module (100) comprising a housing (110) and a panel (120) exposed from a side of the housing (110);
a host (200) located in the housing (110) and comprising:
a power module (210) electrically connected with the panel (120) and an external power supply outside of the housing (110);
a cell module (220) electrically connected with the power module (210) and the panel (120) and having an internal power supply; and
a circuit board (230) electrically connected with the power module (210), the cell module (220) and the panel (120) and provided with:
a processing unit (240) optionally powered by the external power supply and operating at a first frequency normally or powered by the internal power supply and operating at a second frequency; and
a control unit (250) dynamically detecting a voltage level of the power module (210), disabling the power module (210) or enabling the cell module (220) according to the voltage level, and causing the processing unit (240) to operate at the second frequency from the first frequency, the second frequency being lower than the first frequency.

2. The all-in-one computer (10, 20) according to claim 1, wherein the processing unit (240), when powered by the internal power supply, operates at the first frequency for a predetermined time period and operates at the second frequency for a buffer time period which is greater than the predetermined time period.

3. The all-in-one computer (10, 20) according to claim 1, wherein the host (200) further comprises a charging circuit (260) electrically connected with the power module (210) and the cell module (220), the charging circuit (260) transmitting the external power supply received via the power module (210) to the cell module (220), and the cell module (220) storing it as the internal power supply.

4. A method for managing power of an all-in-one computer (10, 20), **characterized by** comprising:
transmitting an external power supply using a power module (210) to a processing unit (240) normally operating at a first frequency;
dynamically detecting a voltage level of the power module (210) and enabling a cell module (220) while disabling the power module (210) according to the voltage level using a control unit (250);
providing an internal power supply to the processing unit (240) using the cell module (220); and
causing the processing unit (240) to operate at a second frequency from the first frequency using the control unit (250), the second frequency being lower than the first frequency.

5. The method according to claim 4, further comprising:
causing the processing unit (240) to operate at the first frequency for a predetermined time period and operate at the second frequency for a buffer time period greater than the predetermined time period after receiving the internal power supply from the cell module (220).

6. The method according to claim 4, further comprising:
transmitting the external power supply to the cell module (220) using the power module (210); and
receiving and storing the external power supply as the internal power supply using the cell module (220).

7. The method according to claim 6, further comprising:
transmitting the external power supply to a charging circuit (260) using the power module (210); and
transmitting the external power supply to the cell module (220) using the charging circuit (260) and charging the cell module (220) with the external power supply.

## Amended claims

### Amended claims in accordance with Rule 137(2) EPC.

**1.** An all-in-one computer (10, 20), **characterized by** comprising:
a display module (100) comprising a housing (110) and a panel (120) exposed from a side of the housing (110);
a host (200) located in the housing (110) and comprising:
a power module (210) electrically connected with the panel (120) and an external power supply outside of the housing (110);
a battery module (220) electrically connected with the power module (210) and the panel (120) and having an internal power supply; and
a circuit board (230) electrically connected with the power module (210), the battery module (220) and the panel (120) and provided with:
a processing unit (240) operating at a first frequency when powered by the external power supply, which is the normal mode of operation, and at a second frequency when powered by the internal power supply; and
a control unit (250) dynamically detecting the voltage level of the power module (210), disabling the power module (210) and enabling the battery module (220) according to the voltage level, and causing the processing unit (240) to switch from the first frequency to a second frequency, the second frequency being lower than the first frequency.

**2.** The all-in-one computer (10, 20) according to claim 1, wherein the processing unit (240), when powered by the internal power supply, operates at the first frequency for a predetermined time period and operates at the second frequency for a buffer time period which is greater than the predetermined time period.

**3.** The all-in-one computer (10, 20) according to claim 1, wherein the host (200) further comprises a charging circuit (260) electrically connected with the power module (210) and the battery module (220), the charging circuit (260) transmitting an externally-supplied power received via the power module (210) to the battery module (220), and the battery module (220) storing it as an internally-supplied power.

**4.** (currently amended)A method for managing power of an all-in-one computer (10, 20), **characterized by** comprising:
transmitting an externally-supplied power using a power module (210) to a processing unit (240) operating at a first frequency, which is the normal mode of operation;
dynamically detecting the voltage level of the power module (210) and enabling a battery module (220) while disabling the power module (210) according to the voltage level using a control unit (250);
providing an internally-supplied power to the processing unit (240) using the battery module (220); and
causing the processing unit (240) to switch from the first frequency to a second frequency using the control unit (250), the second frequency being lower than the first frequency.

**5.** The method according to claim 4, further comprising:
causing the processing unit (240) to operate at the first frequency for a predetermined time period and operate at the second frequency for a buffer time period greater than the predetermined time period after receiving the internally-supplied power from the battery module (220).

**6.** The method according to claim 4, further comprising:
transmitting the externally-supplied power to the battery module (220) using the power module (210); and
receiving and storing the externally-supplied power as the internally-supplied power using the battery module (220).

**7.** The method according to claim 6, further comprising:
transmitting the externally-supplied power to a charging circuit (260) using the power module (210); and
transmitting the externally-supplied power to the battery module (220) using the charging circuit (260) and charging the battery module (220) with the externally-supplied power.
